# EUROPÄISCHE PATENTSCHRIFT

(11) **EP 2 787 332 B1**
(45) Veröffentlichungstag und Bekanntmachung des Hinweises auf die Patenterteilung: **20.02.2019**
(21) Anmeldenummer: 13162144.3
(22) Anmeldetag: 03.04.2013
(51) Int. Cl.: G01J 3/42, G01J 3/02, G01J 1/42

(54) **Spektrometer und Verfahren zum Betrieb**
Spectrometer and method for operation
Spectromètre et son procédé de fonctionnement

(43) Veröffentlichungstag der Anmeldung: 08.10.2014
(73) Patentinhaber: SICK AG, 79183 Waldkirch (DE)
(72) Erfinder: Kaufmann, Jürgen, 79211 Denzlingen (DE); Beyer, Thomas, 79111 Freiburg (DE); Edler, Julian, 79111 Freiburg (DE)
(74) Vertreter: Ludewigt, Christoph

(56) Entgegenhaltungen:
- WO-A1-2005/036112
- WO-A1-2010/125344
- DE-A1- 3 602 139
- DE-B3-102011 082 466
- US-A1- 2004 125 361
- US-A1- 2006 044 556
- US-B2- 6 859 275

## Beschreibung

Die Erfindung betrifft ein Spektrometer nach dem Oberbegriff des Anspruchs 1 und ein Verfahren zum Betrieb eines Spektrometers.

Spektrometer sind im industriellen Bereich, für den die Erfindung beabsichtigt ist, in der Regel einkanalig ausgeführt, d. h. es steht ein optischer Kanal mit einer Lichtquelle, einer Messstrecke und einem Lichtdetektor zur Verfügung. Zumeist handelt es sich um Absorptionsspektrometer, mit denen über eine spektrale Absorption eine Konzentration einer Messgaskomponente eines Messgases bestimmt wird.

Es sind aber auch Spektrometer bekannt, bei denen zur Messung verschiedener Messgaskomponenten Wellenlängen notwendig sind, die nur mit mehreren Lichtquellen, meist Laserdioden, erreicht werden können. Dazu ist es bekannt, das Licht der verschiedenen Laserdioden über Farbteilerspiegel, geometrisch teilende Spiegel oder über Reflexions-Beugungsgitter einzukoppeln. Die Laser werden dabei im Zeitmultiplexbetrieb angesteuert, um das Detektorsignal den einzelnen Laserwellenlängen, also den Absorptionsbanden, zuordnen zu können.

Nachteilig daran ist, dass Teilerspiegelanordnungen hohe Lichtverluste aufweisen, dass die optischen Komponenten, wie Teilerspiegel oder Reflexions-Beugungsgitter kostenaufwändig sind und insbesondere dass ein hoher Aufwand notwendig ist, die Laser im Zeitmultiplexbetrieb thermisch zu stabilisieren. Da die Laser beim Umschalten immer wieder thermisch auf den Arbeitspunkt einschwingen müssen, sind nur kleine Umschaltraten möglich.

Eine weitere Lösung wäre, eine parallele Stahlführung in zwei optischen Kanälen vorzusehen, was aber zu doppelten Bauvolumina und Kosten führt.

Aus der WO 00/62024 ist ein Spektrometer bekannt, das eine breitbandige Lichtquelle aufweist. Das weiße Licht der Lichtquelle durchsetzt die Messstrecke und erst hinter der Messstrecke erfolgt eine spektrale Aufteilung mittels eines Reflexions-Beugungsgitter. Damit jede der durch das Beugungsgitter aufgelösten Wellenlängen auf nur einen Detektor gelenkt werden kann, ist hinter dem Beugungsgitter ein Mikrospiegelarray angeordnet, mit dem die ortsaufgelösten Lichtstrahlen unterschiedlicher Wellenlängen auf den einen Detektor gelenkt werden. Nachteilig daran ist, dass eine solche Anordnung für den Einsatz von monochromatischen Lichtquellen, z. B. Lasern, der heutzutage wegen der Lichtausbeute und der damit einhergehenden möglichen Empfindlichkeit Standard ist, nicht geeignet ist. Des Weiteren bestehen auch die oben genannten Nachteile bezüglich des Einsatzes eines Beugungsgitters.

Aus der DE 10 2011 082 466 B3 ist ein Spektrometer bekannt, bei dem ein schmaler Lichtstrahl über einen einzigen oszillierenden MEMS-Spiegel umgelenkt wird, um den Lichtstrahl zur Vermeidung von störenden Interferenzen auf unterschiedliche Bereiche einer Kollimatorlinse zu lenken.

Die DE 36 02 139 A offenbart einen optischen Aufbau, bei dem Licht verschiedener Lichtquellen über einen an einem Torsionselement befestigten Spiegel jeweils in einen gleichen Strahlengang in ein Messvolumen eingekoppelt werden.

DE US 2006/0044556 A1 offenbart ein Fluoreszenzmessgerät, bei dem das ausgesandte Licht und das Fluoreszenzlicht über das gleiche Spiegelarray umgelenkt werden, wobei ein erster Teil der Spiegel des Arrays in einer ersten Stellung das Sendelicht umlenken und die verbleibenden Spiegel des Arrays in einer zweiten Stellung das Empfangslicht auf den Empfänger umlenken.

Die US 2004/0125361 A und WO 2010/125344 offenbaren Geräte zum Vermessen eines Profils eines Lichtstrahls, bei dem ein Microspiegelarray eingesetzt wird, um einen bestimmten Bruchteil des Strahlprofils auf ein Power-Meter zu lenken, um durch ein damit mögliches "Abscannen" das Strahlprofil zu ermitteln.

Aus der US 6 859 275 B2 ist ein Verfahren und System bekannt, um kodierte räumlich-spektrale Information zu verarbeiten.

Ausgehend von diesem Stand der Technik ist es Aufgabe der Erfindung ein verbessertes Spektrometer bereit zu stellen, mit dem auf kostengünstige Weise eine Mehrkanaligkeit erreicht werden kann und ein entsprechendes Verfahren zum Betrieb eines solchen Spektrometers bereit zu stellen.

Diese Aufgabe wird gelöst durch ein Spektrometer mit den Merkmalen des Anspruchs 1 und ein Verfahren mit den Merkmalen des Anspruchs 6.

Das erfindungsgemäße Spektrometer weist eine erste Lichtquelle, die Lichtstrahlung in einem ersten Wellenlängenbereich erzeugt, eine zweite Lichtquelle, die Lichtstrahlung in einem zweiten Wellenlängenbereich erzeugt, eine Spiegeleinheit zur Umlenkung der Lichtstrahlung der beiden Lichtquellen in eine Messstrecke, wobei die Strahlung beider Wellenlängenbereiche die Messstrecke auf dem gleichen optischen Pfad durchläuft, einen Detektor zum Nachweis der die Messstrecke durchlaufenen Strahlung und eine Auswerteeinheit zum Auswerten der auf den Detektor auftreffenden Strahlung und Bestimmen einer Konzentration einer in der Messstrecke vorliegenden Messgaskomponente, auf. Erfindungsgemäß ist die Spiegeleinheit als Mikrospiegelarray ausgebildet, wobei ein einzelner Mikrospiegel jeweils nur einen Teil der Strahlung umlenkt, was bedeutet, dass der Strahldurchmesser des auf das Spiegelarray treffenden Lichtstrahls mehrere der einzelnen Mikrospiegel überdeckt. Derartige Mikrospiegelarray sind grundsätzlich bekannt und werden auch als MEMS-Spiegelarray (MEMS = Micro-Elektro-Mechanical-System) oder Flächenlichtmodulator oder DLP (Digital Light Processor) oder DMMD (Digital Micro Mirror Device) oder SLM (Spatial Light Modulator) bezeichnet. Allen diesen Geräten ist gemeinsam, dass eine Vielzahl Mikrospiegel zu einem Spiegelarray zusammengefasst sind und mittels der vielen Mikrospiegel eine Umlenkung eines Lichtstrahls erfolgt. Im Folgenden wird deshalb lediglich der Begriff Mikrospiegelarray und Mikrospiegel verwendet.

Der wesentliche Vorteil eines erfindungsgemäßen Spektrometers liegt darin, dass eine Mehrkanaligkeit bei hoher Flexibilität und geringen Mehrkosten (beispielsweise im Vergleich zu einer Bereitstellung von parallelen Messkanälen und somit Verdoppelung der optischen Komponenten) erreicht wird. Dabei wird der Bauraumbedarf nur geringfügig größer und die Lichtverluste sind erheblich geringer als bei bekannten mehrkanaligen Spektrometern. Die Wellenlängenauswahl erfolgt durch Umschalten von einem Kanal auf einen anderen, wobei das Umschalten durch das Mikrospiegelarray erfolgt. Dadurch können die Lichtquellen, z. B. Laser, im thermisch eingeschwungenen Zustand verbleiben, was letztendlich der Lichtintensitätsstabilität und spektralen Stabilität und damit der Zuverlässigkeit und Genauigkeit des Spektrometers zugute kommt. Das Umschalten zwischen den Kanälen kann mit dem Mikrospiegelarray sehr schnell und in hoher Taktrate ohne irgendwelche Einbußen erfolgen. Ein weiterer Vorteil ist, dass das Spektrometer keine bewegten Teile aufweist.

Der zeitliche Zugriff auf die Messkanäle kann einfach durch geeignete Programmierung der Ansteuerung des Mikrospiegelarrays erfolgen. Das bedeutet eine hohe Flexibilität in der Funktionsweise und Anwendung des Spektrometers mit geringem Aufwand.

Ein weiterer Vorteil des erfindungsgemäßen Spektrometers ist es, dass obwohl wenigstens zwei optische Messkanäle vorliegen, nur eine Messtrecke vorliegt und in der folglich nur eine Messzelle für ein Prozessgas vorliegen muss. Damit ist nur ein Prozesszugang für die eine Messzelle notwendig.

Dabei sind die Mikrospiegel des Spiegelarrays einzeln ansteuerbar. Dann kann zum Beispiel ein frei einstellbarer geometrischer Teil eines Lichtstrahls in die Messstrecke und damit auf den Detektor gelenkt werden, so dass unterschiedliche und durch den geometrischen Teil bestimmte Intensitäten auf den Detektor treffen und damit eine Linearitätsprüfung des Detektors möglich ist. Diese Linearitätsprüfung kann ohne besondere Einstellungen oder zusätzliche optische Elemente jederzeit erfolgen.

In ganz analoger Weise kann eine Homogenitätsmessung des auf den Detektor über das Spiegelarray auftreffenden Lichtstrahls, durchgeführt werden.

Weitere Vorteile ergeben sich aus den Ausführungsformen und Weiterbildungen entsprechend der abhängigen Ansprüche.

Der Vorteil, dass während der Betriebs des Spektrometers die Lichtquellen im thermisch eingeschwungenen Zustand verbleiben können, wirkt sich besonders vorteilhaft aus, wenn die Lichtquellen als Laser ausgebildet sind, da deren Ausgangsleistung und Spektrum häufig stark von der Temperatur abhängt.

In Weiterbildung der Erfindung sind die Lichtquellen in ihrem jeweiligen Wellenlängenbereich spektral durchstimmbar, so dass das Spektrometer für TDLS (tunable diode laser spectroscopy) ausgebildet ist. Gerade hier zeigen sich besondere Vorteile, denn es können einerseits sehr schmalbandige Laser für TDLS eingesetzt werden und zusätzlich kann zwischen verschiedenen Wellenlängenbereichen hin und her geschaltet werden. Damit kann TDLS bei unterschiedlichen Absorptionen des Messgases quasi simultan mit einem einzigen Spektrometer gemessen werden. Mit der Erfindung ist quasi eine Mehrzahl von TDLS-Spektrometern zu einem einzigen Spektrometer vereint.

Für den Betrieb des Spektrometers in zwei Wellenlängenbereichen ist es sinnvoll und vorteilhaft, die Lichtquellen im thermisch eingeschwungenen Zustand zu belassen und die Umlenkung zeitmultiplex zu betreiben, so dass die Strahlung beider Wellenlängenbereiche abwechselnd in die Messstrecke umgelenkt wird. Damit lässt sich "quasi" gleichzeitig in beiden Wellenlängenbereichen das Spektrum des zu messenden Gases aufnehmen.

In Weiterbildung der Erfindung sind zusätzliche strahlführende oder strahlformende optische Elemente im Strahlengang zwischen Strahlquelle und Detektor vorhanden.

Das erfindungsgemäße Verfahren zum Betrieb des Spektrometers umfasst die folgenden Schritte:
a) Erzeugen eines ersten Lichtstrahls in einem ersten Wellenlängenbereich mit einer ersten Lichtquelle,
b) Erzeugen eines zweiten Lichtstrahls in einem zweiten, unterschiedlichen Wellenlängenbereich mit einer zweiten Lichtquelle, wobei der erste Lichtstrahl nicht parallel zu dem zweiten Lichtstrahl ist,
c) Umlenken beider Lichtstrahlen mittels eines Mikrospiegelarrays, wobei ein einzelner Mikrospiegel jeweils nur einen Teil der Strahlung in eine Messstrecke umlenkt und wobei die Mikrospiegel einzeln angesteuert werden, so dass jeweils nur geometrische Teilbereiche des Querschnitts eines der beiden Lichtstrahlen in die Messstrecke umgelenkt werden können,
d) Detektieren der die Messstrecke durchlaufenen Strahlung mit einem Detektor,
e) Auswerten des detektierten Lichts und Bestimmen einer Konzentration einer in der Messstrecke vorliegenden Messgaskomponente und Durchführen einer Linearitätsprüfung des Detektors und/oder einer Homogenitätsmessung des entsprechenden Lichtstrahls aus durch die geometrischen Teile bestimmten Intensitäten auf dem Detektor.

Dabei kann vorgesehen sein, dass die Lichtstrahlen der Lichtquellen jeweils zeitlich variabel in die Messtrecke umgelenkt werden, also zum Beispiel zeitlich abwechselnd (alternierend) mit bestimmter Taktrate, wobei in einem Takt (Periode) die zeitlichen Anteile des Lichts der beiden Lichtquellen gleich groß sind.

Andererseits kann es in bestimmten Anwendungen auch sinnvoll sein, die zeitlichen Anteile unterschiedlich zu wählen. Auch wäre es denkbar, keine periodischen Umschaltungen zwischen den beiden Lichtquellen vorzusehen, sondern das Spiegelarray so anzusteuern, dass jeweils Licht bestimmter Wellenlänge mit einer vorbestimmten Dauer die Messstrecke durchsetzt.

Die Vorteile dieses Verfahrens sind die gleichen, wie die bereits oben im Zusammenhang mit dem Spektrometer erläuterten.

Im Folgenden wird die Erfindung anhand eines Ausführungsbeispiels unter Bezugnahme auf die Zeichnung im Einzelnen erläutert. In der Zeichnung zeigen:

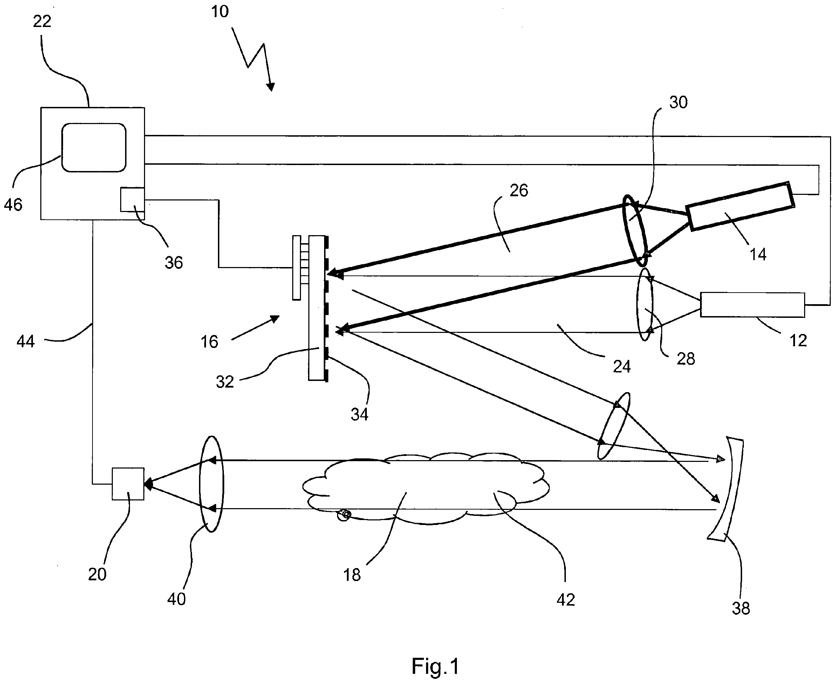

- Fig. 1: eine schematische Darstellung des erfindungsgemäßen Spektrometers;
- Fig. 2: eine schematische Draufsicht auf das Mikrospiegelarray;
- Fig. 3: eine qualitative, schematische Darstellung des Detektorsignals in zwei beispielhaften Wellenlängenbereichen.

Ein erfindungsgemäßes Spektrometer 10 umfasst eine erste Lichtquelle 12, eine zweite Lichtquelle 14, eine Spiegeleinheit 16, eine Messstrecke 18, einen Detektor 20 sowie eine Auswerteeinheit 22.

Die erste Lichtquelle 12, die vorzugsweise eine durchstimmbare Laserdiode (TDL) ist, erzeugt eine Lichtstrahlung 24 in einem ersten Wellenlängenbereich, beispielsweise zwischen 1532 und 1533 nm. Die zweite Lichtquelle 14, die ebenfalls vorzugsweise eine durchstimmbare Laserdiode ist, erzeugt eine zweite Lichtstrahlung 26 in einem zweiten Wellenlängenbereich, beispielsweise um 1840 nm herum. Durch Vorschaltung jeweils einer Optik 28 bzw. 30 vor der ersten bzw. zweiten Lichtquelle besteht der erste Lichtstrahl 24 aus parallelem Licht und der Lichtstrahl 26 ebenfalls. Der Lichtstrahl 24 ist aber nicht parallel zu dem Lichtstrahl 26, denn beide Lichtquellen 12 und 14 richten ihren Lichtstrahl 24 bzw. 26 auf die gleiche Spiegeleinheit 16.

Die Spiegeleinheit 16 ist als Mikrospiegelarray 32 ausgebildet. Das Mikrospiegelarray 32 weist einzelne Mikrospiegel 34 auf, die über eine geeignete Ansteuereinheit 36 einzeln ansteuerbar sind, also einzeln ausgerichtet werden können.

Das Mikrospiegelarray 32 lenkt sowohl den Lichtstrahl 24 als auch den Lichtstrahl 26 in die gleiche Richtung ab, und zwar in Richtung auf einen Hohlspiegel 38, so dass die Lichtstrahlen 24 und 26 vom Mikrospiegelarray 32 über den Hohlspiegel 38 zum Detektor 20 den gleichen optischen Weg zurücklegen. Vom Hohlspiegel 38 werden die Lichtstrahlen in die Messstrecke 18 umgelenkt und nach Durchlaufen der Messstrecke 18 von einer Empfangslinse 40 auf den Detektor 20 fokussiert.

In der Messstrecke 18 befindet sich ein Messgas 42 mit wenigstens einer Messgaskomponente, deren Konzentration gemessen werden soll. Das Messgas 42 kann in einer nicht dargestellten Messzelle in die Messstrecke 18 eingebracht sein, wozu die Messzelle dann entsprechende Fenster aufweisen müsste, durch die die Lichtstrahlen treten könnten.

Die Detektorsignale werden über eine Leitung 44 an die Auswerteeinheit 22 geführt und dort ausgewertet und entweder auf einem geeigneten Display 46 dargestellt oder über einen nicht dargestellten Ausgang ausgegeben. Die Auswerteeinheit 22 enthält gleichzeitig eine Ansteuerung für die Lichtquellen 12 und 14, um diese zu aktivieren und in ihrem jeweiligen Wellenlängenbereich durchzustimmen.

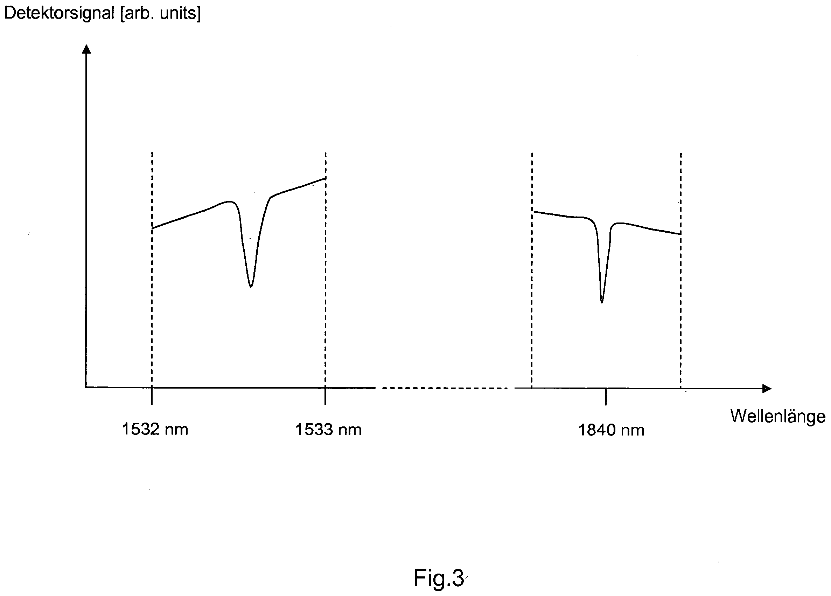

Für eine Absorptionsmessung wird beispielsweise die erste Lichtquelle 12 von 1532 nm bis 1533 nm durchgestimmt und zeitgleich am Detektor 20 von der Auswerteeinheit 22 das Signal abgegriffen. Liegt in dem Wellenbereich eine Absorption durch eine Messgaskomponente vor, erfolgt eine Absorption, wie sie beispielhaft in Fig. 3 dargestellt ist. In gleicher Weise lässt sich die Lichtquelle 14 durchstimmen und zeitgleich das entsprechende Detektorsignal aufnehmen, so dass ein Spektrum aufgenommen wird, wie es beispielhaft in Fig. 3 dargestellt ist, wenn in diesem Wellenlängenbereich eine Absorption vorliegt. In Fig. 3 ist beispielhaft eine Absorption bei 1840 nm dargestellt.

Damit die Lichtstrahlen 24 bzw. 26 nach Umlenkung durch das Mikrospiegelarray 32 auf den gleichen optischen Pfad geführt sind, müssen die einzelnen Mikrospiegel 34, die von den Lichtstrahlen getroffen werden, in geeigneter Weise angesteuert werden, so dass ihre Ausrichtung die gewünschte Umlenkung bewirkt. Diese Ansteuerung erfolgt durch die genannte Ansteuereinheit 36, die dazu in geeigneter Weise programmiert ist. Auf diese Weise kann eine schnelle Umschaltung mit einer hohen Taktrate zwischen verschiedenen Stellungen der Mikrospiegel 34 erfolgen, so dass in einem ersten Taktintervall Lichtstrahlen 24 des ersten Wellenlängenbereichs in die Messstrecke umgelenkt werden und in einem zweiten Taktintervall die Lichtstrahlen 26 des zweiten Wellenlängenbereichs in die Messstrecke umgelenkt werden. Auf diese Weise kann ein sehr schnelles Umschalten zwischen den beiden Wellenlängenbereichen erfolgen und somit quasi gleichzeitig die beiden Absorptionsspektren der beiden Wellenlängenbereiche aufgenommen werden.

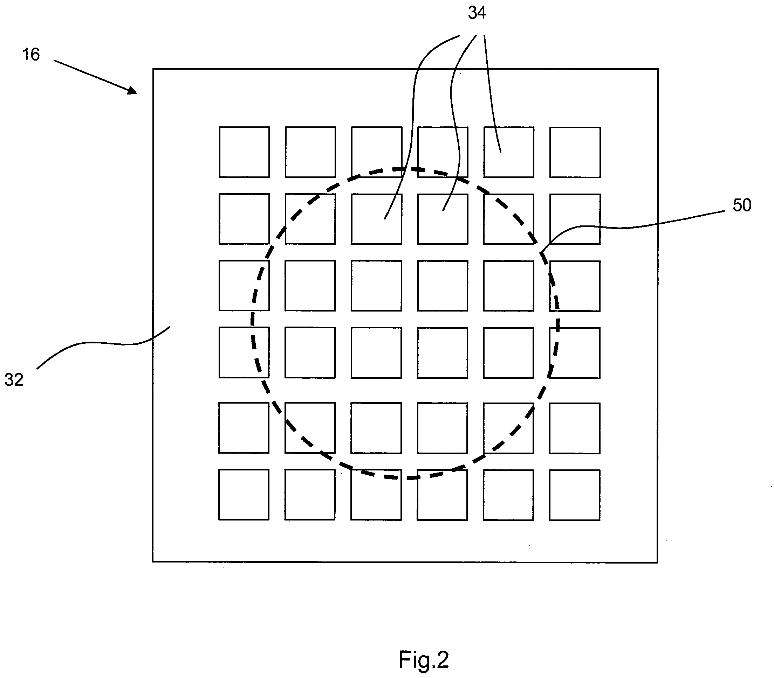

In Fig. 2 ist eine Draufsicht auf das Mikrospiegelarray 32 mit den einzelnen Mikrospiegeln 34 schematisch dargestellt. Ebenfalls dargestellt ist ein Lichtfleck 50, wie er von den Lichtstrahlen 24 und 26 auf dem Array erzeugt wird. Die Lichtstrahlen überdecken also eine Vielzahl der Mikrospiegel 34, so dass bei Einzelansteuerung der Mikrospiegel 34 auch nur ein Teil des jeweiligen Lichtstrahls umgelenkt werden könnte und damit den Detektor 20 erreicht. Auf diese Weise kann einerseits die Lichtintensität in der Messstrecke bzw. die Intensität des Lichts, das auf den Detektor fällt, verändert werden, indem mehr oder weniger Mikrospiegelarray 34 das Licht auf den Hohlspiegel 38 und damit auf den Detektor 20 lenkt. Auf diese Weise kann eine Liniearitätsprüfung des Detektors 20 erfolgen, indem nämlich die Lichtintensität auf diese Weise "durchgefahren" wird und die Detektorreaktion ausgewertet wird.

Des Weiteren kann damit auch die Homogenität des Lichtflecks 50 und damit die Homogenität über den Querschnitt in der Messstrecke bestimmt werden. Dazu lenken einzelne Mikrospiegelarray 34 ihren Anteil in die Messstrecke und damit auf den Detektor 20, so dass in der Auswerteeinheit 22, von der aus die Ansteuerung der Mikrospiegel 34 über die Ansteuereinheit 36 erfolgt und die damit weiß, welcher Mikrospiegel sein Licht auf den Detektor lenkt und die gleichzeitig die Detektorsignale einliest, letztendlich die Homogenität des Lichtflecks 50 bestimmt werden kann. Die Auflösung mit der diese Homogenität bestimmt werden kann, ist von der Größe der Mikrospiegel 34 abhängig.

## Patentansprüche

1. Spektrometer mit einer ersten Lichtquelle (12), die erste Lichtstrahlung (24) in einem ersten Wellenlängenbereich erzeugt, einer zweiten Lichtquelle (14), die zweite Lichtstrahlung (26) in einem zweiten, unterschiedlichen Wellenlängenbereich erzeugt, einer Spiegeleinheit (16) zur Umlenkung der Lichtstrahlen (24, 26) in eine Messstrecke (18), wobei die Strahlung (24, 26) beider Wellenlängenbereiche die Messstrecke (18) auf dem gleichen optischen Pfad durchläuft, einem Detektor (20) zum Nachweis der die Messstrecke (18) durchlaufenen Strahlung (24, 26) und mit einer Auswerteeinheit (22) zum Auswerten der auf den Detektor (20) auftreffenden Strahlung (24, 26) und Bestimmen einer Konzentration einer in der Messstrecke (18) vorliegenden Messgaskomponente, und wobei die Spiegeleinheit (16) als Mikrospiegelarray (32) ausgebildet ist und ein einzelner Mikrospiegel (34) jeweils nur einen Teil der Strahlung (24, 26) umlenkt,
**dadurch gekennzeichnet, dass**
der erste Lichtstrahl (24) der ersten Lichtquelle (12) nicht parallel zu dem zweiten Lichtstrahl (26) der zweiten Lichtquelle (14) ist,
eine Ansteuereinheit (36) für die Spiegeleinheit (16) vorgesehen ist, mit der eine Wellenlängenauswahl durch Umschalten zwischen einem durch die Lichtstrahlen (24) im ersten Wellenlängenbereich gebildeten Kanal und einem durch die Lichtstrahlen (26) im zweiten Wellenlängenbereich gebildeten Kanal erfolgt,
und die Mikrospiegel (34) des Spiegelarrays (32) über die Ansteuereinheit (36) einzeln ansteuerbar sind, so dass jeweils nur geometrische Teilbereiche des Querschnitts eines der beiden Lichtstrahlen (24 und 26) in die Messstrecke (18) umgelenkt werden können und die Auswerteeinheit (22) dazu ausgebildet ist, aus den durch die geometrischen Teile bestimmten Intensitäten auf dem Detektor (20) eine Linearitätsprüfung des Detektors (20) durchzuführen und/oder eine Homogenitätsmessung des entsprechenden Lichtstrahls (24 bzw. 26) durchzuführen.

2. Spektrometer nach Anspruch 1, **dadurch gekennzeichnet, dass** die Lichtquellen als Laser ausgebildet sind.

3. Spektrometer nach einem der vorhergehenden Ansprüche, **dadurch gekennzeichnet, dass** die Lichtquellen in ihrem jeweiligen Wellenlängenbereich spektral durchstimmbar ausgebildet sind.

4. Spektrometer nach einem der vorhergehenden Ansprüche, **dadurch gekennzeichnet, dass** die Lichtquellen im thermisch eingeschwungenen Zustand betrieben werden und die Umlenkung zeitmultiplex betrieben wird, so dass die Strahlung beider Wellenlängenbereiche abwechselnd in die Messstrecke umgelenkt wird.

5. Spektrometer nach einem der vorhergehenden Ansprüche, **dadurch gekennzeichnet, dass** zusätzliche strahlführende oder strahlformende optische Elemente im Strahlengang zwischen Strahlquelle und Detektor vorhanden sind.

6. Verfahren zum Betrieb eines Spektrometers (10) mit den Schritten:
a) Erzeugen eines ersten Lichtstrahls (24) in einem ersten Wellenlängenbereich mit einer ersten Lichtquelle (12),
b) Erzeugen eines zweiten Lichtstrahls (26) in einem zweiten, unterschiedlichen Wellenlängenbereich mit einer zweiten Lichtquelle (14), wobei der erste Lichtstrahl (24) nicht parallel zu dem zweiten Lichtstrahl (26) ist,
c) Umlenken beider Lichtstrahlen (24 und 26) mittels eines Mikrospiegelarrays (32), wobei ein einzelner Mikrospiegel (34) jeweils nur einen Teil der Strahlung in eine Messstrecke (18) umlenkt und wobei die Mikrospiegel (34) einzeln angesteuert werden, so dass jeweils nur geometrische Teilbereiche des Querschnitts eines der beiden Lichtstrahlen (24 bzw. 26) in die Messstrecke (18) umgelenkt werden können,
d) Detektieren der die Messstrecke (18) durchlaufenen Strahlung mit einem Detektor (20),
e) Auswerten des detektierten Lichts und Bestimmen einer Konzentration einer in der Messstrecke (18) vorliegenden Messgaskomponente und Durchführen einer Linearitätsprüfung des Detektors (20) und/oder einer Homogenitätsmessung des entsprechenden Lichtstrahls (24 bzw. 26) aus durch die geometrischen Teile bestimmten Intensitäten auf dem Detektor (20).

7. Verfahren nach Anspruch 6, wobei die Lichtstrahlen der Lichtquellen jeweils zeitlich variabel in die Messtrecke umgelenkt werden.

## Claims

1. Spectrometer having a first light source (12) which generates first light radiation (24) in a first wavelength range, a second light source (14) which generates second light radiation (26) in a second, different wavelength range, a mirror unit (16) for deflecting the light beams (24, 26) into a measuring path (18), the radiation (24, 26) of both wavelength ranges traversing the measuring path (18) on the same optical path, a detector (20) for detecting the radiation (24, 26) passing through the measuring path (18) and having an evaluation unit (22) for evaluating the radiation (24, 26) impinging on the detector (20) and determining a concentration of a sample gas component present in the measuring path (18), and the mirror unit (16) being designed as a micro-mirror array (32) and a single micro-mirror (34) deflecting in each case only part of the radiation (24, 26),
**characterised in that**
the first light beam (24) of the first light source (12) is not parallel to the second light beam (26) of the second light source (14),
a control unit (36) is provided for the mirror unit (16), with which a wavelength selection is effected by switching between a channel formed by the light beams (24) in the first wavelength range and a channel formed by the light beams (26) in the second wavelength range,
and the micro mirrors (34) of the mirror array (32) are individually controllable via the control unit (36), so that in each case only geometrical subregions of the cross-section of one of the two light beams (24 and 26) can be deflected into the measuring section (18), and the evaluation unit (22) is designed to carry out a linearity check of the detector (20) from the intensities on the detector (20) determined by the geometrical parts and/or to carry out a homogeneity measurement of the corresponding light beam (24 or 26).

2. Spectrometer according to claim 1, **characterized in that** the light sources are designed as lasers.

3. Spectrometer according to one of the preceding claims, **characterized in that** the light sources are spectrally tunable in their respective wavelength range.

4. Spectrometer according to one of the preceding claims, **characterized in that** the light sources are operated in the thermally steady state and the deflection is operated time-division multiplexed, so that the radiation of both wavelength ranges is deflected alternately into the measuring path.

5. Spectrometer according to one of the preceding claims, **characterized in that** additional beam-guiding or beam-shaping optical elements are present in the beam path between beam source and detector.

6. Method for operating a spectrometer (10) comprising the steps:
a) generating a first light beam (24) in a first wavelength range with a first light source (12),
b) generating a second light beam (26) in a second, different wavelength range with a second light source (14), wherein the first light beam (24) is not parallel to the second light beam (26),
c) deflecting both light beams (24 and 26) by means of a micro-mirror array (32), wherein a single micro-mirror (34) deflects in each case only a part of the radiation into a measuring path (18) and wherein the micro-mirrors (34) are driven individually so that in each case only geometrical partial regions of the cross-section of one of the two light beams (24 and 26, respectively) can be deflected into the measuring path (18),
d) detecting the radiation passing through the measuring path (18) with a detector (20),
e) evaluating the detected light and determining a concentration of a sample gas component present in the measuring section (18) and carrying out a linearity check of the detector (20) and/or a homogeneity measurement of the corresponding light beam (24 or 26) from intensities determined by the geometric parts on the detector (20).

7. Method according to claim 6, wherein the light beams of the light sources are deflected into the measuring path in each case variably over time.

## Revendications

1. Spectromètre comportant une première source de lumière (12) qui génère un premier rayonnement lumineux (24) dans une première plage de longueurs d'onde, une seconde source de lumière (14) qui génère un second rayonnement lumineux (26) dans une seconde plage de longueurs d'onde différente, une unité miroir (16) pour dévier les faisceaux lumineux (24, 26) dans un trajet de mesure (18), le rayonnement (24, 26) des deux plages de longueurs d'onde traversant le trajet de mesure (18) sur le même trajet optique, un détecteur (20) pour détecter le rayonnement (24, 26) traversant le trajet de mesure (18) et comportant une unité d'évaluation (22) pour évaluer le rayonnement (24, 26) frappant le détecteur (20) et déterminer une concentration d'un composant gazeux échantillon présent dans le trajet de mesure (18), et l'unité miroir (16) étant conçue comme un réseau de micromiroirs (32) et un seul micromiroir (34) qui ne déflète respectivement qu'une partie du rayonnement (24, 26),
**caractérisé en ce que**
le premier faisceau lumineux (24) de la première source de lumière (12) n'est pas parallèle au deuxième faisceau lumineux (26) de la deuxième source de lumière (14),
une unité de commande (36) est prévue pour l'unité miroir (16), avec laquelle une sélection de longueur d'onde est effectuée par commutation entre un canal formé par les faisceaux lumineux (24) dans la première plage de longueur d'onde et un canal formé par les faisceaux lumineux (26) dans la seconde plage de longueur d'onde,
et les micro-miroirs (34) du réseau de miroirs (32) peuvent être commandés individuellement par l'intermédiaire de l'unité de commande (36), de sorte que seules des sous-régions géométriques de la section transversale de l'un des deux faisceaux lumineux (24 et 26) peuvent être déviées dans la zone de mesure (18), et l'unité de contrôle (22) est conçue pour contrôler la linéarité du détecteur (20) à partir des valeurs d'intensité déterminées par les parties géométriques et/ou pour effectuer une mesure d'homogénéité du faisceau lumineux (24 et 26) correspondant.

2. Spectromètre selon la revendication 1, **caractérisé en ce que** les sources lumineuses sont conçues comme des lasers.

3. Spectromètre selon l'une des revendications précédentes, **caractérisé en ce que** les sources lumineuses sont accordables spectralement dans leur plage de longueurs d'onde respective.

4. Spectromètre selon l'une des revendications précédentes, **caractérisé en ce que** les sources lumineuses sont exploitées à l'état thermiquement stable et la déviation est exploitée en multiplexage temporel, de sorte que le rayonnement des deux plages de longueurs d'onde est dévié alternativement dans le trajet de mesure.

5. Spectromètre selon l'une des revendications précédentes, **caractérisé en ce que** des éléments optiques supplémentaires de guidage ou de formation de faisceau sont présents dans le trajet du faisceau entre la source de faisceau et le détecteur.

6. Procédé de fonctionnement d'un spectromètre (10) comprenant les étapes :
a) générer un premier faisceau lumineux (24) dans une première gamme de longueurs d'onde avec une première source lumineuse (12),
b) générer un second faisceau lumineux (26) dans une seconde plage de longueurs d'onde différente avec une seconde source de lumière (14), dans lequel le premier faisceau lumineux (24) n'est pas parallèle au second faisceau lumineux (26),
c) la déviation des deux faisceaux lumineux (24 et 26) au moyen d'un réseau de micromiroirs (32), dans lequel un seul micromiroir (34) dévie à chaque fois seulement une partie du rayonnement dans un trajet de mesure (18) et dans lequel les micromiroirs (34) sont entraînés individuellement de sorte que seules des régions partielles géométriques de la section d'un des deux faisceaux lumineux (24 et 26 respectivement) puissent être déversées dans le trajet de mesure (18),
d) détecter le rayonnement traversant le trajet de mesure (18) avec un détecteur (20),
e) évaluer la lumière détectée et déterminer une concentration d'un composant gazeux échantillon présent dans la section de mesure (18) et effectuer un contrôle de linéarité du détecteur (20) et/ou une mesure d'homogénéité du faisceau lumineux correspondant (24 ou 26) à partir des intensités déterminées par les parties géométriques du détecteur (20).

7. Procédé selon la revendication 6, dans lequel les faisceaux lumineux des sources lumineuses sont déviés dans le trajet de mesure de manière variable dans le temps.
